# EUROPEAN PATENT SPECIFICATION

(11) **EP 3 281 992 B1**
(45) Date of publication and mention of the grant of the patent: **18.11.2020**
(21) Application number: 16776458.8
(22) Date of filing: 31.03.2016
(51) Int. Cl.: C09D 11/16, C09B 67/46, C09D 11/17, C09B 69/10

(54) **DISPERSION LIQUID OF COLORED RESIN FINE PARTICLES FOR AQUEOUS INKS, AND AQUEOUS INK COMPOSITION FOR WRITING UTENSILS USING SAME**
DISPERSIONSFLÜSSIGKEIT MIT FARBIGEN HARZFEINPARTIKELN FÜR WÄSSRIGE TINTEN UND WÄSSRIGE TINTENZUSAMMENSETZUNG FÜR SCHREIBUTENSILIEN, DIE DIESELBE VERWENDET
DISPERSION LIQUIDE DE FINES PARTICULES DE RÉSINE COLORÉES POUR ENCRES AQUEUSES ET COMPOSITION D´ENCRE AQUEUSE POUR INSTRUMENTS D´ÉCRITURE UTILISANT CELLE-CI

(30) Priority: 06.04.2015 JP 2015077779; 05.08.2015 JP 2015155221
(43) Date of publication of application: 14.02.2018
(73) Proprietor: MITSUBISHI PENCIL COMPANY, LIMITED, Tokyo 140-8537 (JP)
(72) Inventor: HAGA Hisato, Yokohama-shi Kanagawa 221-8550 (JP); IWASA Atsushi, Yokohama-shi Kanagawa 221-8550 (JP)
(74) Representative: Vossius & Partner Patentanwälte Rechtsanwälte mbB
(86) International application number: PCT/JP2016/060603
(87) International publication number: WO 2016/163291

(56) References cited:
- WO-A1-2004/092285
- JP-A- H10 259 337
- JP-A- 2002 053 788
- JP-A- 2002 356 602
- JP-A- 2002 356 602
- JP-A- 2004 075 818
- US-A- 5 942 560
- US-A1- 2004 035 322
- US-A1- 2005 228 069

## Description

### Technical Field

The present invention relates to a dispersion of colored resin fine particles for an aqueous ink which has property of improving a drying property of the drawn lines in addition to performances of a colorant such as a color developability, a weather resistance, and stability, and an aqueous ink composition for a writing instrument which is prepared by using the dispersion and which is suited to writing instruments such as felt-tip pens, marking pens, and ballpoint pens.

### Background Art

It has so far been known that resin emulsions having a specific polymer composition colored with a dye are used as a colorant called a pseudo pigment.

Known are, for example, 1) a colored resin fine particle aqueous dispersion for an aqueous ink prepared by dissolving a water-soluble basic dye in a vinyl monomer having an acidic functional group in the presence of a polymerizable surfactant and emulsion-polymerization of the vinyl monomer (refer to, for example, patent document 1), 2) a colored resin fine particle aqueous dispersion for an ink prepared by emulsion-polymerization of a vinyl monomer in the presence of a polymerizable surfactant to obtain an emulsion-polymerized liquid, dissolving a water-soluble dye in the resulting polymerized liquid and then thermally treating the liquid thus prepared (refer to, for example, patent document 2), 3) a colored resin fine particle aqueous dispersion prepared by emulsion-copolymerization of a mixed vinyl monomer containing a vinyl monomer having an acidic functional group in which a water-soluble basic dye is dissolved and a vinyl monomer having a cyano group in the presence of a polymerizable surfactant (refer to, for example, patent document 3), and 4) an aqueous ink characterized by containing resin particles comprising a copolymer containing as constitutional monomers, a cyano group-containing vinyl monomer (A) colored with a dye and one or both of a vinyl monomer (B) and a vinyl monomer (C) which are represented by specific formulas (refer to, for example, patent document 4).

The respective coloring materials described in patent documents 1 to 4 described above exert excellent effects in terms of a color developability, a weather resistance, stability and the like, but information on the exertion of performances other than the above effects are not present therein.

It is the existing situation that strongly desired are colored resin fine particles for an aqueous ink which have the performances of a coloring material such as a color developability, a weather resistance, and stability and which have more performances in addition thereto.

Patent document 5 discloses a colored resin fine particle water base dispersion liquid for a water base ink prepared by emulsion-polymerizing a vinyl monomer having an acid functional group in which a water soluble basic dye is dissolved in the presence of a polymerizable surfactant, wherein said surfactant is capable of reacting with the double bond of a vinyl monomer.

### Related Art Documents

### Patent documents

Patent document 1: Japanese Patent Application Laid-Open No. Hei. 10-259337 (claims, examples and others)
Patent document 2: Japanese Patent Application Laid-Open No. Hei. 10-77435 (claims, examples and others)
Patent document 3: Japanese Patent Application Laid-Open No. Hei. 10-77436 (claims, examples and others)
Patent document 4: Japanese Patent Application Laid-Open No. 2001-181544 (claims, examples and othres)
Patent document 5: US 5,942,560

### SUMMARY OF THE INVENTION

### Problems to be Solved by the Invention

In light of the problems on the conventional technologies described above, the present invention tries to solve the problems, and an object thereof is to provide a dispersion of colored resin fine particles for an aqueous ink which has property of improving a drying property of the drawn lines in addition to performances of a colorant such as a color developability, a weather resistance, and stability, and an aqueous ink composition for a writing instrument which is prepared by using the dispersion and which is suited to writing instruments such as felt-tip pens, marking pens, and ballpoint pens.

In light of the conventional problems described above, intense researches repeated by the present inventors have resulted in finding that a dispersion of colored resin fine particles for an aqueous ink which meets the object described above, and an aqueous ink composition for a writing instrument which is prepared by using the dispersion are obtained by applying a dispersion in which colored resin fine particles comprising at least a vinyl monomer (A) containing an acidic functional group of a carboxyl group having solubility of a specific value or lower in water, an ester monomer (B) of acrylic acid or methacrylic acid with linear or cyclic alcohol having a carbon number falling in a specific range, and a basic dye or an oil-soluble dye are dispersed in water. Thus, the present invention have been come to complete.

That is, the present invention resides in the claims. Further disclosed are the following items (1) to (6).
(1) A dispersion of colored resin fine particles for an aqueous ink in which the colored resin fine particles comprising at least a vinyl monomer (A) containing an acidic functional group of a carboxyl group having solubility of 10% by mass or less in water, an ester monomer (B) of acrylic acid or methacrylic acid with linear or cyclic alcohol having 2 to 18 carbon atoms, and a basic dye or an oil-soluble dye are dispersed in water.
(2) The dispersion of colored resin fine particles for an aqueous ink as described in the above item (1), wherein a total content of the carboxyl group-containing vinyl monomer (A) and the ester monomer (B) in the polymer components constituting the colored resin fine particles for an aqueous ink is 60% by mass or more.
(3) The dispersion of colored resin fine particles for an aqueous ink as described in the above item (2), wherein a content of the carboxyl group-containing vinyl monomer (A) is 40% by mass or more, and a content of the ester monomer (B) is 20% by mass or more.
(4) The dispersion of colored resin fine particles for an aqueous ink as described in any one of the above items (1) to (3), wherein the resin fine particles further comprise a dicyclopenta(te)nyl (meth)acrylate monomer (C).
(5) The dispersion of colored resin fine particles for an aqueous ink as described in the above item (4), wherein a content of the dicyclopenta(te)nyl (meth)acrylate monomer (C) in the polymer components constituting the colored resin fine particles for an aqueous ink is 1 to 25% by mass.
(6) An aqueous ink composition for a writing instrument containing the dispersion of colored resin fine particles for an aqueous ink as described in any one of the above items (1) to (5), a water-soluble organic solvent and water.

According to the present invention as defined in the claims, provided are a dispersion of colored resin fine particles for an aqueous ink which has property of improving a drying property of the drawn lines in addition to the performances of a colorant such as a color developability, a weather resistance, and stability, and an aqueous ink composition for a writing instrument which is prepared by using the dispersion and which is suited to writing instruments such as felt-tip pens, marking pens, and ballpoint pens.

Further, use of the dicyclopenta(te)nyl (meth)acrylate monomer (C) for the dispersion results in providing a dispersion of colored resin fine particles for an aqueous ink which is provided with the effects described above and which is less liable to be damaged in stability even when a moisture is vaporized, and an aqueous ink composition for a writing instrument.

### DESCRIPTION of THE PREFERRED EMBODIMENTS

The embodiment of the present invention shall be explained below in detail.

The dispersion of the colored resin fine particles for an aqueous ink according to the present invention is characterized in that colored resin fine particles comprising at least a vinyl monomer (A) containing an acidic functional group of a carboxyl group having solubility of 10% by mass or lower in water, the ester monomer (B) of acrylic acid or methacrylic acid with at least one linear or cyclic alcohol as defined in claim 1,
and the basic dye or an oil-soluble dye are dispersed in water.

The vinyl monomer containing an acidic functional group of a carboxyl group having solubility of 10% by mass or less in water which is the component (A) used in the present invention is a coloring monomer, and the coloring monomer shall not specifically be restricted as long as the coloring monomer is a vinyl monomer having an acidic functional group of a carboxyl group having solubility of 10% by mass or less in water. The coloring monomer includes, for example, at least one (each alone or a mixture of two or more kinds thereof; hereinafter the same shall apply) of 2-methacryloyloxyethyl succinate [Acryl Ester SA, solubility in water: 1.86% by mass, manufactured by Mitsubishi Rayon Co., Ltd.], 2-methacryloyloxyethyl maleate [Acryl Ester ML, solubility in water: 9.17% by mass, manufactured by Mitsubishi Rayon Co., Ltd.], 2-methacryloyloxyethyl phthalate [Acryl Ester PA, solubility in water: 0.08% by mass, manufactured by Mitsubishi Rayon Co., Ltd.], 2-methacryloyloxyethyl hexahydrophthalate [Acryl Ester HH, solubility in water: 3.40% by mass, manufactured by Mitsubishi Rayon Co., Ltd.], and the like.

2-Methacryloyloxyethyl phthalate is particularly preferably used from the viewpoint of providing the emulsion with satisfactory color developability.

In the present invention, use of the vinyl monomer containing a carboxyl group having solubility of 10% by mass or lower in water makes it possible to enhance a ratio of the acidic monomer in the mixed monomer with the component (B), and therefore an amount of the basic dye or the oil-soluble dye which can be mixed with the vinyl monomer is increased very much to result in making it possible to obtain the colored resin fine particles which are intense in a color and excellent in a color developability.

The emulsion prepared by using a vinyl monomer containing a carboxyl group having solubility exceeding 10% by mass in water, or the emulsion prepared by using as a main component, a vinyl monomer having only an acidic functional group other than a carboxyl group such as a sulfone group makes it impossible to exert the effects of the present invention.

The ester monomer of acrylic acid or methacrylic acid with the linear or cyclic alcohol which is the component (B) used in the present invention is a frame monomer, and the ester monomer is an ester of acrylic acid or methacrylic acid with the linear or cyclic alcohol.

In the invention, n-butyl (meth)acrylate, lauryl methacrylate and cyclohexyl methacrylate are used from the viewpoint of further improving a drying property of the drawn lines.

At least one of ethyl (meth)acrylate, propyl (meth)acrylate, isopropyl (meth)acrylate, isobutyl (meth)acrylate, t-butyl (meth)acrylate, hexyl (meth)acrylate, cyclohexyl acrylate, octyl (meth)acrylate, 2-ethylhexyl (meth)acrylate, lauryl acrylate, palmityl (meth)acrylate, stearyl (meth)acrylate, behenyl (meth)acrylate, and the like can be optionally present.

The above term "(meth)acrylate" represents "acrylate and/or methacrylate".

The component (B) used is an ester monomer of acrylic acid or methacrylic acid with the linear or cyclic alcohol, and therefore the effects of the present invention cannot be exerted by methyl (meth)acrylate.

The basic dye used in the present invention includes, for example, at least one of basic dyes such as di- and triarylmethane dyes; quinoneimine dyes such as azine dyes (including nigrosine), oxazine dyes, and thiazine dyes; xanthene dyes; triazoleazo dyes; thiazoleazo dyes; benzothiazoleazo dyes; azo dyes; methine dyes such as polymethine dyes, azomethine dyes, and azamethine dyes; anthraquinone dyes; phthalocyanine dyes, and the like. The water-soluble basic dyes are preferred.

The specific examples of the yellow basic dyes which can be used include dyes described in COLOR INDEX, such as C. I. Basic Yellow-1, -2, -9, -11, -12, -13, -14, -15, -19, -21, -23, -24, -25, -28, -29, -32, -33, -34, -35, -36, -40, -41, -51, - 63, -73, and -80. Further, commercially available yellow basic dyes include AIZEN CATHILON YELLOW GPLH (trade name manufactured by Hodogaya Chemical Co., Ltd.) and the like.

The examples of the orange basic dyes include dyes described in COLOR INDEX, such as C. I. Basic Orange-1, -2, -7, -14, -15, -21, -22, -23, -24, -25, -30, -32, -33, and 34.

The examples of the red basic dyes include dyes described in COLOR INDEX, such as C. I. Basic Red-1, -2, -3, -4, -8, -9, -12, -13, -14, -15, -16, -17, -18, -22, -23, -24, -25, -26, - 27, -29, -30, -32, -34, -35, -36, -37, -38, -39, -40, -41, -42, -43, -46, -49, -50, -51, -52, and -53. Further, commercially available red basic dyes include AIZEN CATHILON RED BLH, AIZEN CATHILON RED RH and the like (all above are trade names manufactured by Hodogaya Chemical Co., Ltd.), Diacryl Supra Brilliant Red 2G and the like (trade name manufactured by Mitsubishi Chemical Corporation), Sumiacryl Red B (trade name manufactured by Sumitomo Chemical Corporation), and the like.

The examples of the violet basic dyes include dyes described in COLOR INDEX, such as C. I. Basic Violt-1, -2, -3, -4, -5, -6, -7, -8, -10, -11, -11 : 1, -12, -13, -14, -15, -16, -18, -21, -23, -24, -25, -26, -27, -28, -29, -33, and -39.

The examples of the blue basic dyes include dyes described in COLOR INDEX, such as C. I. Basic Blue-1, -2, -3, -5, -6, -7, -8, -9, -15, -18, -19, -20, -21, -22, -24, -25, - 26, -28, -29, -33, -35, -37, -40, -41, -42, -44, -45, -46, -47, -49, -50, -53, -54, -58, -59, -60, -62, -63, -64, -65, -66, - 67, -68, -69, -70, -71, -75, -77, -78, -79, -82, -83, -87, and -88. Further, commercially available blue basic dyes include AIZEN CATHILON TURQUOISE BLUE LH (trade name manufactured by Hodogaya Chemical Co., Ltd.) and the like.

The examples of the green basic dyes include dyes described in COLOR INDEX, such as C. I. Basic Green-1, -4, -6, and -10. Further, commercially available green basic dyes include Diacryl Supra Brilliant Green 2GL (trade name manufactured by Mitsubishi Chemical Corporation) and the like.

The examples of the brown basic dyes include dyes described in COLOR INDEX, such as C. I. Basic Brown-1, -2, -4, -5, -7, -11, -12, -13, and -15. Further, commercially available brown basic dyes include Janus Brown R (trade name manufactured by Nippon Chemical Co., Ltd.), AIZEN CATHILON BROWN GH (trade name manufactured by Hodogaya Chemical Co., Ltd.) and the like.

The examples of the black basic dyes include dyes described in COLOR INDEX, such as C. I. Basic Black-1, -2, -3, -7, and -8, or nigrosine basic dyes.

The oil-soluble dye used in the present invention includes commercially available monoazo, disazo, metal complex type monoazo, anthraquinone, phthalocyanine, triarylmethane and the like. Also, halochromic oil-soluble dyes obtained by substituting functional groups of acidic and basic dyes with hydrophobic groups can be used as well.

The yellow oil-soluble dye includes respectively C. I. Solvent Yellow 114 and 116; the orange oil-soluble dye includes C. I. Solvent Orange 67; the red oil-soluble dye includes C. I. Solvent Red 122 and 146; the blue oil-soluble dye includes C. I. Solvent Blue 5, 36, 44, 63, 70, 83, 105, and 111; and the black oil-soluble dye includes C. I. Solvent Black 3, 7, 27, and 29, and the like.

The specific oil-soluble dyes include Blue Dye SBN Blue 701 (manufactured by Hodogaya Chemical Co., Ltd.), Blue Dye Oil Blue 650 (manufactured by Orient Chemical Industries Co., Ltd.), Red Dye SOC-1-0100 (manufactured by Orient Chemical Industries Co., Ltd.), Oil Black 860 (manufactured by Orient Chemical Industries Co., Ltd.), and the like.

In the dispersion of colored resin fine particles for an aqueous ink according to the present invention, the colored resin fine particles comprising at least the vinyl monomer containing a carboxyl group having solubility of 10% by mass or lower in water as the acidic functional group of the component (A) described above and the ester monomer of acrylic acid or methacrylic acid with the linear or cyclic alcohol
as the component (B) described above, and the basic dye or the oil-soluble dye are dispersed in water. The dispersion of colored resin fine particles can be produced, for example, by dissolving the basic dye or the oil-soluble dye in the mixed monomer comprising the vinyl-containing monomer containing a carboxyl group having a solubility of 10% by mass or lower in water as the acidic functional group of the component (A) described above and the ester monomer of acrylic acid or methacrylic acid with the linear or cyclic alcohol as the component (B) described above, and emulsion-polymerization of the mixed monomer with a polymerization initiator such as ammonium persulfate, potassium persulfate, and hydrogen peroxide and a polymerization initiator obtained by using a reducing agent in combination therewith, and further using, if necessary, a polymerizable surfactant. In the case described above, the dyeing is carried out at the same time as the polymerization, but the dyeing may be carried out after the polymerization by dissolving the basic dye or the oil-soluble dye.

In the emulsion polymerization described above carried out in the present invention, the dicyclopenta(te)nyl (meth)acrylate monomer may be further mixed as the component (C) with the component (A) and the component (B) each described above to carry out the emulsion polymerization. It is because of the reasons that the polymer obtained by the emulsion polymerization further mixing the dicyclopenta(te)nyl (meth)acrylate monomer as the component (C) is less liable to be damaged in stability even if a moisture in the dispersion is volatilized and that the dispersion of colored resin fine particles for an aqueous ink and the aqueous ink composition for a writing instrument which are more excellent in stability are obtained.

The dicyclopenta(te)nyl (meth)acrylate monomer includes dicyclopentanyl acrylate monomer, dicyclopentenyl acrylate monomer, dicyclopentanyl methacrylate monomer, and dicyclopentenyl methacrylate monomer.

In the emulsion polymerization described above carried out in the present invention, another hydrophobic vinyl monomer in addition to the component (A), the component (B) and the component (C) each described above may be mixed to carry out the emulsion polymerization. The hydrophobic vinyl monomer which can be used shall not specifically be restricted, and the hydrophobic vinyl monomer includes, for example, styrenes such as styrene and methylstyrene. In the above emulsion polymerization, monomers having a reactive cross-linking group such as epoxy group, hydroxymethylamide group, and isocyanate group, and multifunctional monomers having two or more vinyl groups may be blended for cross-linking.

In the present invention, a total content of the carboxyl group-containing vinyl monomer of the component (A) and the ester monomer of the component (B) in the polymer components constituting the colored resin fine particles for an aqueous ink described above accounts for preferably 60% by mass or more, more preferably 70% by mass or more to 100% by mass based on the constituted polymer form the viewpoints of improving a drying property of the drawn lines in addition to the performances of the colorant such as a color developability, a weather resistance, and stability to further exert the effects of the present invention. Particularly preferably, a content of the carboxyl group-containing vinyl monomer of the component (A) is 40% by mass or more, and a content of the ester monomer of the component (B) is 20% by mass or more.

When the dicyclopenta(te)nyl (meth)acrylate monomer of the component (C) is used, a content the dicyclopenta(te)nyl (meth)acrylate monomer in the polymer components constituting the colored resin fine particles for an aqueous ink described above is preferably 1 to 25% by mass, more preferably 5 to 15% by mass form the viewpoints of improving stability and further enhancing the ink performances.

In the present invention, a content of the basic dye or the oil-soluble dye is preferably 0.2 to 50% by mass, more preferably 0.5 to 10% by mass based on a total amount of the monomers in terms of the performances of the colorant such as a color developability, a weather resistance, and stability.

The polymerizable surfactant which can be used if necessary shall not specifically be restricted as long as the surfactant is a polymerizable surfactant which is usually used in the emulsion polymerization described above, and the polymerizable surfactant is, for example, an anionic or nonionic surfactant and includes at least one of ADECA REASOAP NE-10, NE-20, NE-30, NE-40, and SE-10N manufactured by ADECA CORPORATION, LATEMUL S-180, S-180A, and S-120A manufactured by Kao Corporation, ELEMINOL JS-20 manufactured by Sanyo Chemical Industries, Ltd., and the like.

A use amount of the above polymerizable surfactants is 0 to 50% by mass, preferably 0.1 to 50% by mass based on a total amount of the monomers.

In the present invention, the dispersion of the colored resin fine particles for an aqueous ink in which the colored resin fine particles having a resin solid matter content of 20 to 50% by mass are dispersed in water is obtained by the preferred embodiment described above, to be specific, by dissolving, as described above, the basic dye or the oil-soluble dye in the mixed monomer comprising at least 40% by mass or more of the carboxyl group-containing vinyl monomer of the component (A) described above and 20% by mass or more of the ester monomer of the component (B) described above, and emulsion-polymerization of the mixed monomer, or dissolving the basic dye or the oil-soluble dye in the polymer at least after polymerization the component (A) and the component (B) to dye the polymer.

The resulting dispersion of the colored resin fine particles described above is provided with property of improving a drying property of the drawn lines which has not so far been ever observed in addition to the performances of the coloring material such as a color developability, a weather resistance, and stability, and the dispersion of the colored resin fine particles is useful as a colorant for an aqueous ink composition suited to writing instruments such as felt-tip pens, marking pens, and ballpoint pens.

Further, when the dicyclopenta(te)nyl (meth)acrylate monomer (C) described above is used, that is, the dispersion of the colored resin fine particles for an aqueous ink in which 20 to 50% by mass of the colored resin fine particles in terms of a resin solid matter content is dispersed in water is obtained by dissolving, as described above, the basic dye or the oil-soluble dye in the mixed monomer comprising the carboxyl group-containing vinyl monomer of the component (A) described above, the ester monomer of the component (B) described above and the dicyclopenta(te)nyl (meth)acrylate monomer of the above component (C), and emulsion-polymerization of the mixed monomer, or dissolving the basic dye or the oil-soluble dye in the polymer at least after polymerization of the component (A), the component (B) and the component (C) to dye the polymer. The dispersion of the colored resin fine particles for an aqueous ink in which the colored resin fine particles further polymerized with the above component (C) are dispersed in water results in being provided with property of improving a drying property of the drawn lines which has not so far been ever observed and property in which stability of the dispersion is less liable to be damaged even if a moisture is volatilized in addition to the performances of the colorant such as a color developability, a weather resistance, and stability.

Also, in the present invention, an average particle diameter of the colored resin fine particles in the resulting dispersion of the colored resin fine particles for an aqueous ink is varied according to the kind of the respective monomers, the contents, the polymerization conditions in the polymerization, and the like. The average particle diameter is 0.8 µm or less, and the ink composition does not cause clogging in a pen feed of a writing instrument such as a felt-tip pen, a marking pen, and a ballpoint pen and is excellent in a storage stability. The "average particle diameter" prescribed in the present invention is a value of D50 measured by means of a particle size distribution measuring equipment [FPAR 1000 manufactured by Otsuka Electronics Co., Ltd.].

The aqueous ink composition for a writing instrument according to the present invention is characterized by containing the dispersion of the colored resin fine particles having the constitution described above, a water-soluble organic solvent and water.

The water-soluble organic solvent which can be used includes, for example, at least one of alkylene glycols such as ethylene glycol, triethylene glycol, tetraethylene glycol, propylene glycol, dipropylene glycol, 1,2-propanediol, 1,3-propanediol, 1,2-butanediol, 2,3-butanediol, 1,3-butanediol, 1,4-butanediol, 1,2-pentanediol, 1,5-pentanediol, 2,5-hexanediol, 3-methyl-1,3-butanediol, 2-metuylpentane-2,4-diol, 3-metuylpentane-1,3,5-triol, and 1,2,3-hexanetriol, polyalkylene glycols such as polyethylene glycol and polypropylene glycol, glycerols such as glycerol, diglycerol, and triglycerol, lower alkyl ethers of glycols such as ethylene glycol monomethyl ether, ethylene glycol monoethyl ether, diethylene glycol monomethyl ether, diethylene glycol monoethyl ether, and diethylene glycol mono-n-butyl ether, N-methyl-2-pyrrolidone, 1,3-dimethyl-2-imidalizinone, and the like.

In addition thereto, capable of being mixed as well are, for example, alcohols such as methyl alcohol, ethyl alcohol, isopropyl alcohol, n-butyl alcohol, tert-butyl alcohol, isobutyl alcohol, hexyl alcohol, octyl alcohol, nonyl alcohol, decyl alcohol, and benzyl alcohol, amides such as dimethylformamide and diethylacetamide, ketones such as acetone.

A content of the above water-soluble organic solvents is varied according to the kind of writing instruments such as felt-tip pens, marking pens, and ballpoint pens, and the content is 1 to 40% by mass based on a total amount of the ink composition. The ink composition in which a content of the solvent is 10% by mass or less is particularly effective in terms of further improving a drying property of the drawn lines, and the content is controlled more preferably to 3 to 8% by mass.

Also, a content of water (tap water, refined water, ion-exchanged water, distilled water, purified water and the like) is preferably 30 to 90% by mass, more preferably 40 to 60% by mass based on a total amount of the ink composition.

In the aqueous ink composition for a writing instrument according to the present invention, a preservative or a fungicide, a pH modifier, a defoamer and the like can suitably be selected and used, if necessary, as long as the effects of the present invention are not damaged.

The pH modifier includes, for example, at least one of ammonia, urea, monoethanolamine, diethanolamine, triethanolamine, aminomethylpropanol, alkali metal salts of carbonic acid and phosphoric acid such as sodium tripolyphosphate and sodium carbonate, hydroxides of alkali metals such as sodium hydroxide.

The preservative or the fungicide includes at least one of phenol, sodium omadine, sodium pentachlorophenol, 1,2-benzisothiazoline-3-one, 2,3,5,6-tetrachloro-4-(methylsulfonyl)pyridine, alkali metal salts of benzoic acid, sorbic acid and dehydroacetic acid, benzimidazole base compounds, and the like.

The lubricant includes at least one of phosphoric esters, polyalkylene glycol derivatives such as polyoxyethylene lauryl ether, fatty acid alkali salts, nonionic surfactants, fluorine base surfactants such as perfluoroalkylphosphate esters and the like, polyether-modified silicones such as polyethylene glycol adducts of dimethylpolysiloxane.

The aqueous ink composition for a writing instrument thus constituted according to the present invention contains the dispersion of the colored resin fine particles for an aqueous ink which has property of improving a drying property of the drawn lines in addition to the performances of the coloring material such as a color developability, a weather resistance, and stability, and therefore the aqueous ink composition for a writing instrument which is suited to writing instruments such as felt-tip pens, marking pens, and ballpoint pens is obtained.

Further, use of the dicyclopenta(te)nyl (meth)acrylate monomer (C) results in providing the aqueous ink composition for a writing instrument with property in which stability of the composition is less liable to be damaged even if a moisture is volatilized in addition to the performances of the coloring material such as a color developability, a weather resistance, and stability and property of improving a drying property of the drawn lines which has not so far been ever observed.

### EXAMPLES

Next, the present invention shall be explained in further details with reference to examples and comparative examples, but the present invention shall not be restricted to the examples shown below.

### [Examples 1 to 17 and Comparative Examples 1 to 4]

The respective dispersions of colored resin fine particles for an aqueous ink were prepared in Examples 1 to 17 and Comparative Examples 1 to 4 by the following production methods.

### (Example 1)

A flask of 2 liter equipped with a stirrer, a reflux condenser, a thermometer, a nitrogen gas-inlet and a 1000 ml separating funnel for addition of a monomer was set in a hot water bath and charged with 500 g of distilled water, 50 g of a polymerizable surfactant (ADECA REASOAP SE-10N manufactured by ADECA CORPORATION) and 3 g of ammonium persulfate, and it was heated up to an internal temperature of 50°C while introducing a nitrogen gas.

On the other hand, 40 g of a water-soluble basic dye (AIZEN CATHILON RED BLH 200%, manufactured by Hodogaya Chemical Co., Ltd.) was mixed with 500 g of a mixed monomer comprising 300 g of 2-methacryloyloxyethyl phthalate (Acryl Ester PA, solubility in water: 0.08% by mass, manufactured by Mitsubishi Rayon Co., Ltd.) as the component (A) and 200 g of n-butyl methacrylate as the component (B) to prepare a solution.

The solution prepared above was added in 3 hours to the flask maintained at a temperature of about 50°C from the separating funnel while stirring to carry out emulsion polymerization. Further, the solution was aged for 5 hours to terminate the polymerization to obtain a dispersion of colored resin fine particles for an aqueous ink.

### (Example 2)

A dispersion of colored resin fine particles for an aqueous ink was obtained in the same procedure as in Example 1 described above, except that in Example 1, 150 g of n-butyl acrylate was used as the component (B).

### (Example 3)

A dispersion of colored resin fine particles for an aqueous ink was obtained in the same procedure as in Example 1 described above, except that in Example 1, 150 g of lauryl methacrylate was used as the component (B).

### (Example 4)

A dispersion of colored resin fine particles for an aqueous ink was obtained in the same procedure as in Example 1 described above, except that in Example 1, 150 g of myristyl acrylate was used as the component (B).

### (Example 5)

A dispersion of colored resin fine particles for an aqueous ink was obtained in the same procedure as in Example 1 described above, except that in Example 1, 150 g of cyclohexyl methacrylate was used as the component (B).

### (Example 6)

A dispersion of colored resin fine particles for an aqueous ink was obtained in the same procedure as in Example 1 described above, except that in Example 1, 200 g of 2-methacryloyloxyethyl succinate (Acryl Ester SA, solubility in water: 1.86% by mass, manufactured by Mitsubishi Rayon Co., Ltd.) was used as the component (A).

### (Exampl e 7), reference

A dispersion of colored resin fine particles for an aqueous ink was obtained in the same procedure as in Example 6 described above, except that in Example 6, 150 g of myristyl acrylate was used as the component (B).

### (Example 8)

A dispersion of colored resin fine particles for an aqueous ink was obtained in the same procedure as in Example 6 described above, except that in Example 6, 150 g of cyclohexyl methacrylate was used as the component (B).

### (Example 9)

A dispersion of colored resin fine particles for an aqueous ink was obtained in the same procedure as in Example 2 described above, except that in Example 2, 200 g of 2-methacryloyloxyethyl hexahydrophthalate (Acryl Ester HH, solubility in water: 3.40% by mass, manufactured by Mitsubishi Rayon Co., Ltd.) was used as the component (A).

### (Example 10)

A dispersion of colored resin fine particles for an aqueous ink was obtained in the same procedure as in Example 9 described above, except that in Example 9, 150 g of cyclohexyl methacrylate was used as the component (B).

### (Example 11)

A dispersion of colored resin fine particles for an aqueous ink was obtained in the same procedure as in Example 3 described above, except that in Example 3, 150 g of 2-methacryloyloxyethyl maleate (Acryl Ester ML, solubility in water: 9.17% by mass, manufactured by Mitsubishi Rayon Co., Ltd.) was used as the component (A).

### (Example 12)

A dispersion of colored resin fine particles for an aqueous ink was obtained in the same procedure as in Example 1 described above, except that in Example 1, VALIFAST BLACK 3830 manufactured by Orient Chemical Industries Co., Ltd. was used as the oil-soluble dye in place of 40 g of the water-soluble basic dye (AIZEN CATHILON RED BLH 200%, manufactured by Hodogaya Chemical Co., Ltd.).

### (Example 13)

In Example 1 described above, 40 g of the water-soluble basic dye (AIZEN CATHILON RED BLH 200%, manufactured by Hodogaya Chemical Co., Ltd.) was not added, and the above water-soluble basic dye was added after the polymerization to thereby obtain a dispersion of colored resin fine particles for an aqueous ink.

### (Example 14)

A flask of 2 liter equipped with a stirrer, a reflux condenser, a thermometer, a nitrogen gas-inlet and a 1000 ml separating funnel for addition of a monomer was set in a hot water bath and charged with 420 g of distilled water, 50 g of the polymerizable surfactant [ADECA REASOAP SE-10N manufactured by ADECA CORPORATION] and 3 g of ammonium persulfate, and it was heated up to an internal temperature of 50°C while introducing a nitrogen gas.

On the other hand, 40 g of the water-soluble basic dye (AIZEN CATHILON RED BLH 200%, manufactured by Hodogaya Chemical Co., Ltd.) was mixed with 580 g of a mixed monomer comprising 300 g of 2-methacryloyloxyethyl phthalate (Acryl Ester PA, solubility in water: 0.08% by mass, manufactured by Mitsubishi Rayon Co., Ltd.) as the component (A), 200 g of n-butyl methacrylate as the component (B) and 80 g of dicyclopentanyl acrylate as the component (C) to prepare a solution.

The solution prepared above was added in 3 hours to the flask maintained at a temperature of about 50°C from the separating funnel while stirring to carry out emulsion polymerization. Further, the solution was aged for 5 hours to terminate the polymerization to obtain a dispersion of colored resin fine particles for an aqueous ink.

### (Example 15)

A dispersion of colored resin fine particles for an aqueous ink was obtained in the same procedure as in Example 14 described above, except that in Example 14, VALIFAST BLACK 3830 manufactured by Orient Chemical Industries Co., Ltd. was used as the oil-soluble basic dye in place of 40 g of the water-soluble basic dye (AIZEN CATHILON RED BLH 200%, manufactured by Hodogaya Chemical Co., Ltd.).

### (Example 16)

A dispersion of colored resin fine particles for an aqueous ink was obtained in the same procedure as in Example 14 described above, except that in Example 14, dicyclopentanyl acrylate was used in place of dicyclopentanyl methacrylate.

### (Example 17)

A dispersion of colored resin fine particles for an aqueous ink was obtained in the same procedure as in Example 14 described above, except that in Example 16, VALIFAST BLACK 3830 manufactured by Orient Chemical Industries Co., Ltd. was used as the oil-soluble basic dye in place of 40 g of the water-soluble basic dye (AIZEN CATHILON RED BLH 200%, manufactured by Hodogaya Chemical Co., Ltd.).

### (Comparative Example 1)

A dispersion of colored resin fine particles for an aqueous ink was obtained in the same procedure as in Example 1 described above, except that in Example 1, 150 g of methyl methacrylate was used as the component (B).

### (Comparative Example 2)

A dispersion of colored resin fine particles for an aqueous ink was obtained in the same procedure as in Example 6 described above, except that in Example 6, 150 g of methyl methacrylate was used as the component (B).

### (Comparative Example 3)

A dispersion of colored resin fine particles for an aqueous ink was obtained in the same procedure as in Example 9 described above, except that in Example 9, 150 g of methyl methacrylate was used as the component (B).

### (Comparative Example 4)

A dispersion of colored resin fine particles for an aqueous ink was obtained in the same procedure as in Example 11 described above, except that in Example 11, 150 g of methyl methacrylate was used as the component (B).

### (Preparation of an aqueous ink composition for a writing instrument)

In the following, Example 7 is given for reference.

The respective dispersions of the colored resin fine particles for an aqueous ink obtained in Examples 1 to 17 and Comparative Examples 1 to 4 were used to prepare the respective aqueous ink compositions for a writing instrument by an ordinary method according to a blend composition shown below.

The respective dispersions of the colored resin fine particles for an aqueous ink had an average particle diameter falling in a range of 0.05 to 0.30 pm and a resin solid content falling in a range of 10 to 50% by mass.

### (Blend composition)

| | |
|---|---|
| Respective dispersions of the colored resin fine particles for an aqueous ink | 50% by mass |
| pH modifier (triethanolamine) | 1% by mass |
| Water-soluble organic solvent (ethylene glycol) | 5% by mass |
| Ion-exchanged water | 44% by mass |

The resulting aqueous ink compositions for a writing instrument (total amount: 100% by mass) were used to prepare marking pens as a writing instrument by the following method, and marking pens were used to evaluate stability, a drawn line drying property (writing paper, textbook) and stability in evaporation of a moisture by the following evaluation methods.

The respective evaluation results of the aqueous ink compositions obtained in Examples 1 to 17 and Comparative Examples 1 to 4 are shown in the following Table 1.

### (Preparation of writing instrument: marking pen)

A marking pen (trade name: PROPUS WINDOW PUS-102T, pen tip, thick: PE resin, fine: PET fiber, manufactured by Mitsubishi Pencil Co., Ltd.) was charged with the respective ink compositions prepared in Examples 1 to 17 and Comparative Examples 1 to 4 described above to prepare marking pens.

### (Evaluation method of stability)

Glass-made vial bottles charged with the respective ink compositions prepared in Examples 1 to 17 and Comparative Examples 1 to 4 described above were covered with caps and stored under the environment of 50°C to evaluate a period in which the ink in the vial bottle was not observed to be aggregated or settled down after determinate time passed "period in which stability is maintained" according to the following evaluation criteria.

### Evaluation criteria:

⊚: 3 months or longer
O: 1 month or longer and shorter than 3 months
Δ: 2 weeks or longer and shorter than 1 month
X: shorter than 2 weeks

### (Evaluation method of drying property of drawn line)

The marking pens charged with the respective ink compositions prepared in Examples 1 to 17 and Comparative Examples 1 to 4 described above were used to draw a freehand drawaing lines having a length of about 25 cm on a writing paper and a paper of a plain part of the textbook (Various Theories Japanese History, Yamakawa Shuppansha Ltd., published on 2013, the same hereafter). The drawn lines were rubbed softly thereon with a finger covered with a finger sack (finger sack for office use, Mech-2, manufactured by Kokuyo Co., Ltd.) to a direction vertical to the drawn lines every constant time to evaluate the shortest time (drying time of the drawn lines) at which the drawn lines were not rubbed off or stained according to the following evaluation criteria.

### Evaluation criteria:

⊚: 3 seconds or shorter
O: 5 seconds or shorter
Δ: 10 seconds or shorter
x: shorter than 20 seconds
xx: 20 seconds or longer

### (Evaluation method of stability in evaporation of a moisture)

The respective dispersions prepared in Examples 1 to 17 and Comparative Examples 1 to 4 described above were put on glass-made petri dishes, and moistures thereof were evaporated up to 30% of the original weights to measure the viscosities of the dispersions before and after evaporation of the moistures at 25°C and a shear rate of 191.5 sec⁻¹ by means of a viscometer TV-25 (manufactured by Toki Sangyo Co., Ltd.).

**Table 1**

| | | Example | | | | | | | | | | | |
|---|---|---|---|---|---|---|---|---|---|---|---|---|---|
| | | 1 | 2 | 3 | 4 | 5 | 6 | 7 | 8 | 9 | | 10 | 11 |
| Stability | | ⊚ | ⊚ | ⊚ | ⊚ | ⊚ | ⊚ | ⊚ | ⊚ | ⊚ | | ⊚ | ⊚ |
| Viscosity of before and after evaporation (mPa•s) | before evaporation | 7.5 | 5.5 | 6.7 | 8.1 | 7.5 | 9.3 | 9.9 | 10.1 | 8.7 | | 10.7 | 13.4 |
| | after evaporation | 56.3 | 50.1 | 50.8 | 60.9 | 57.3 | 69.8 | 75.6 | 78.6 | 69.0 | | 87.1 | 123.1 |
| Drying property of drawn line | writing paper | ⊚ | ○ | ○ | Δ | ○ | ○ | Δ | ○ | ○ | | ○ | Δ |
| | textbook | ⊚ | ○ | ○ | Δ | ○ | ○ | Δ | ○ | ○ | | ○ | Δ |

| | | Example | | | | | | Comparative Example | | | | | |
|---|---|---|---|---|---|---|---|---|---|---|---|---|---|
| | | 12 | 13 | 14 | 15 | 16 | 17 | 1 | 2 | | 3 | | 4 |
| Stability | | ⊚ | ⊚ | ⊚ | ⊚ | ⊚ | ⊚ | ⊚ | ⊚ | | ⊚ | | ⊚ |
| Viscosity of before and after evaporation (mPa•s) | before evaporation | 50.8 | 41.9 | 10.6 | 11.2 | 9.7 | 11.1 | 29.3 | 30.4 | | 32.1 | | 33.5 |
| | after evaporation | 388.2 | 323.7 | 37.1 | 39.4 | 35.8 | 38.7 | 205.0 | 214.2 | | 227.1 | | 238.2 |
| Drying property of drawn line | writing paper | ⊚ | ⊚ | ⊚ | ⊚ | ⊚ | ⊚ | × | × × | | × × | | × × |
| | textbook | ⊚ | ⊚ | ⊚ | ⊚ | ⊚ | ⊚ | × | × × | | × × | | × × |

To discuss the results shown in Table 1, it has been found that the dispersions of the colored resin fine particles for an aqueous ink which have property of improving a drying property of the drawn lines in addition to the performances of the colorant such as a color developability, a weather resistance, and stability, and the aqueous ink compositions for a writing instrument which are suited to writing instruments are obtained in Examples 1 to 13.

Further, it has been found that the dispersions of the colored resin fine particles for an aqueous ink which are provided with the same effects as in Examples 1 to 13 described above and which are less liable to be damaged in stability even when a moisture is evaporated, and the aqueous ink compositions for a writing instrument which are suited to writing instruments are obtained in Examples 14 to 17.

In contrast with Examples, it has been found that the effects of the present invention cannot be exerted in Comparative Examples 1 to 4 out of the scope of the present invention.

### Industrial Applicability

Obtained are a dispersion of colored resin fine particles for an aqueous ink, and an aqueous ink composition for a writing instrument which is prepared by using the above dispersion and which is suited to writing instruments such as felt-tip pens, marking pens, and ballpoint pens.

## Claims

1. A dispersion of colored resin fine particles for an aqueous ink in which the colored resin fine particles comprising at least a vinyl monomer (A) containing an acidic functional group of a carboxyl group having solubility of 10% by mass or less in water, an ester monomer (B) of acrylic acid or methacrylic acid with linear or cyclic alcohol selected from the group consisting of at least one of n-butyl (meth)acrylate, lauryl
methacrylate, and cyclohexyl methacrylate, and a basic dye or an oil-soluble dye are dispersed in water.

2. The dispersion of colored resin fine particles for an aqueous ink as described in claim 1, wherein a total content of the carboxyl group-containing vinyl monomer (A) and the ester monomer (B) in the polymer components constituting the colored resin fine particles for an aqueous ink is 60% by mass or more.

3. The dispersion of colored resin fine particles for an aqueous ink as described in claim 2, wherein a content of the carboxyl group-containing vinyl monomer (A) is 40% by mass or more, and a content of the ester monomer (B) is 20% by mass or more.

4. The dispersion of colored resin fine particles for an aqueous ink as described in any one of claims 1 to 3, wherein the resin fine particles further comprise a dicyclopenta(te)nyl (meth)acrylate monomer (C) selected from dicyclopentanyl acrylate monomer, dicyclopentenyl acrylate monomer, dicyclopentanyl methacrylate monomer, and dicyclopentenyl methacrylate monomer.

5. The dispersion of colored resin fine particles for an aqueous ink as described in claim 4, wherein a content of the dicyclopenta(te)nyl (meth)acrylate monomer (C) selected from dicyclopentanyl acrylate monomer, dicyclopentenyl acrylate monomer, dicyclopentanyl methacrylate monomer, and dicyclopentenyl methacrylate monomer in the polymer components constituting the colored resin fine particles for an aqueous ink is 1 to 25% by mass.

6. An aqueous ink composition for a writing instrument containing the dispersion of colored resin fine particles for an aqueous ink as described in any one of claims 1 to 5, a water-soluble organic solvent and water.

## Patentansprüche

1. Eine Dispersion mit farbigen Harzfeinpartikeln für eine wässrige Tinte, in der die farbigen Harzfeinpartikel, die mindestens ein Vinylmonomer (A), welches eine saure funktionelle Gruppe einer Carboxylgruppe mit einer Löslichkeit in Wasser von 10Massen-% oder weniger enthält, ein Estermonomer (B) aus Acrylsäure oder Methacrylsäure mit linearem oder cyclischem Alkohol, ausgewählt aus der Gruppe bestehend aus mindestens einem aus n-Butyl-(meth)acrylat, Laurylmethacrylat und Cyclohexylmethacrylat und einen basischen Farbstoff oder einen öllöslichen Farbstoff umfassen, in Wasser dispergiert sind.

2. Die Dispersion mit farbigen Harzfeinpartikeln für eine wässrige Tinte wie in Anspruch 1 beschrieben, wobei ein Gesamtgehalt des Carboxylgruppe enthaltenden Vinylmonomers (A) und des Estermonomers (B) in den Polymerkomponenten, die die farbigen Harzfeinpartikel für eine wässrige Tinte bilden, 60 Massen-% oder mehr beträgt.

3. Die Dispersion mit farbigen Harzfeinpartikeln für eine wässrige Tinte wie in Anspruch 2 beschrieben, wobei ein Gehalt des Carboxylgruppe enthaltenden Vinylmonomers (A) 40 Massen-% oder mehr beträgt und ein Gehalt des Estermonomers (B) 20 Massen-% oder mehr beträgt.

4. Die Dispersion mit farbigen Harzfeinpartikeln für eine wässrige Tinte wie in einem der Ansprüche 1 bis 3 beschrieben, wobei die Harzfeinpartikel ferner ein Dicyclopenta(te)nyl(meth)acrylatmonomer (C) umfassen, ausgewählt aus Dicyclopentanylacrylatmonomer, Dicyclopentenylacrylatmonomer, Dicyclopentanylmethacrylatmonomer und Dicyclopentenylmethacrylatmonomer.

5. Die Dispersion mit farbigen Harzfeinpartikeln für eine wässrige Tinte wie in Anspruch 4 beschrieben, wobei ein Gehalt des Dicyclopenta(te)nyl(meth)-acrylatmonomers (C), ausgewählt aus Dicyclopentanylacrylatmonomer, Dicyclopentenylacrylatmonomer, Dicyclopentanylmethacrylatmonomer und Dicyclopentenylmethacrylatmonomer in den Polymerkomponenten, die die farbigen Harzfeinpartikel für eine wässrige Tinte bilden, 1 bis 25 Massen-% beträgt.

6. Eine wässrige Tintenzusammensetzung für ein Schreibinstrument, enthaltend die Dispersion mit farbigen Harzfeinpartikeln für eine wässrige Tinte wie in einem der Ansprüche 1 bis 5 beschrieben, ein wasserlösliches organisches Lösungsmittel und Wasser.

## Revendications

1. Dispersion de fines particules de résine colorées pour une encre aqueuse, dans laquelle les fines particules de résine colorées comprenant au moins un monomère de vinyle (A) contenant un groupe fonctionnel acide d'un groupe carboxyle ayant une solubilité dans l'eau de 10 % en masse ou moins, un monomère ester (B) d'acide acrylique ou d'acide méthacrylique avec un alcool linéaire ou cyclique, qui est choisi dans le groupe constitué par au moins l'un parmi le (méth)acrylate de n-butyle, le méthacrylate de lauryle et le méthacrylate de cyclohexyle, et un colorant basique ou un colorant soluble dans l'huile, sont dispersées dans de l'eau.

2. Dispersion de fines particules de résine colorées pour une encre aqueuse selon la revendication 1, dans laquelle la teneur totale en le monomère de vinyle (A) contenant un groupe carboxyle et du monomère ester (B) dans les composants polymères constituant les fines particules de résine colorées pour une encre aqueuse est de 60 % en masse ou plus.

3. Dispersion de fines particules de résine colorées pour une encre aqueuse selon la revendication 2, dans laquelle la teneur en le monomère de vinyle (A) contenant un groupe carboxyle est de 40 % en masse ou plus, et la teneur en le monomère ester (B) est de 20 % en masse ou plus.

4. Dispersion de fines particules de résine colorées pour une encre aqueuse selon l'une quelconque des revendications 1 à 3, dans laquelle les fines particules de résine comprennent en outre un monomère (méth)acrylate de dicyclopenta(té)nyle (C) choisi parmi un monomère d'acrylate de dicyclopentanyle, un monomère d'acrylate de dicyclopentényle, un monomère de méthacrylate de dicyclopentanyle, et un monomère de méthacrylate de dicyclopentényle.

5. Dispersion de fines particules de résine colorées pour une encre aqueuse selon la revendication 4, dans laquelle la teneur en le monomère (méth)acrylate de dicyclopenta(té)nyle (C) choisi parmi un monomère d'acrylate de dicyclopentanyle, un monomère d'acrylate de dicyclopentényle, un monomère de méthacrylate de dicyclopentanyle, et un monomère de méthacrylate de dicyclopentényle dans les composants polymères constituant les fines particules de résine colorées pour une encre aqueuse est de 1 à 25 % en masse.

6. Composition d'encre aqueuse pour un instrument d'écriture contenant la dispersion de fines particules de résine colorées pour une encre aqueuse telle que décrite dans l'une quelconque des revendications 1 à 5, un solvant organique soluble dans l'eau et de l'eau.
